Europäisches Patentamt

European Patent Office

Office européen des brevets

(19)

(11) Publication number: **0 173 640**
A2

# EUROPEAN PATENT APPLICATION

(21) Application number: 85730099.0

(22) Date of filing: 24.07.85

(51) Int. Cl.⁴: **B 01 D 53/34**

(30) Priority: 30.07.84 JP 157620/84
12.02.85 JP 23568/85

(43) Date of publication of application: 05.03.86
Bulletin 86/10

(84) Designated Contracting States: **AT BE CH DE FR GB IT LI LU NL SE**

(71) Applicant: **MITSUBISHI JUKOGYO KABUSHIKI KAISHA, 5-1, Marunouchi 2-chome Chiyoda-ku, Tokyo (JP)**

(72) Inventor: **Horaguchi, Mitsuhiro c/o Yokohama Machinery Works, MITSUBISHI JUKOGYO K.K. 12, Nishiki-cho, Naka-ku Yokohama City Kanagawa Pref. (JP)**
Inventor: **Tomisawa, Shigechika c/o Yokohama Machinery Works, MITSUBISHI JUKOGYO K.K. 12, Nishiki-cho, Naka-ku Yokohama City Kanagawa Pref. (JP)**
Inventor: **Iida, Yukio c/o Yokohama Machinery Works, MITSUBISHI JUKOGYO K.K. 12, Nishiki-cho, Naka-ku Yokohama City Kanagawa Pref. (JP)**
Inventor: **Tonomura, Joji c/o Yokohama Machinery Works, MITSUBISHI JUKOGYO K.K. 12, Nishiki-cho, Naka-ku Yokohama City Kanagawa Pref. (JP)**

(74) Representative: **Meissner, Peter E., Dipl.-Ing. et al, Patentanwälte Dipl.-Ing. Walter Meissner Dipl.-Ing. Peter E. Meissner Dipl.-Ing. Hans-Joachim Presting Herbertstrasse 22, D-1000 Berlin 33 (DE)**

(54) Method for treating exhaust gas.

(57) The present invention is directed to a method for treating an exhaust gas which comprises cooling an alkaline neutralizing agent powder and blowing the cooled powder into the exhaust gas in order to remove acidic gaseous components from the exhaust gas, and a method for treating an exhaust gas which comprises recovering the used alkaline neutralizing agent, cooling it, and utilizing it again in order to remove acidic gaseous components from the exhaust gas.

The present invention relates to a method for treating exhaust gases from municipal garbage incinerating plants and the like, and more particularly it relates to a method for removing acidic gaseous components from the exhaust gases at low costs.

Heretofore, a dry exhaust gas treatment method has been suggested in which commercially available slaked lime or the like, as an agent for removing acidic gaseous components, is blown into a gas having as relatively low a temperature as a level of 150 to 450°C in order to react the slaked lime with the acidic gaseous components, thereby removing the latter from the exhaust gas.

In this case, a conversion of the slaked lime is within the range of 11 to 15%, for instance, in such an example as a direct dehydrochlorination process (powder-blowing process) in a low-temperature zone, depending upon a concentration of the acidic gaseous components in the aimed exhaust gas and an amount of the fed slaked lime.

Anyway, in the aforesaid method, since the reaction is carried out between the gases and the solid, a conversion of the slaked lime is as low as a level of 11 to 15% and additionally it is difficult to heighten the removal efficiency of the acidic gaseous components in proportion to an increased feed of the slaked lime. This reason is that the reaction of the slaked lime in the exhaust gas is immediately completed as soon as the slaked lime is blown thereinto and afterward its conversion remains at a low degree.

Furthermore, the technique employed at present does not contemplate recovering the used slaked lime and thus the latter is disposed of as a dust without any treatment. In short, the material including 85 to 89% of the unreacted slaked lime is thrown away in vain. Thus, it is apparent that recovering the slaked lime and feeding it to the reaction system again will lead to a reduction in operational costs of the treating apparatus.

Accordingly, an object of the present invention is to provide a method for treating an exhaust gas by which slaked lime for reaction is reutilized to enhance its conversion 2 or 3 times as much as that of the conventional technique and to thereby decrease operational costs of the treating apparatus.

Moreover, according to the present invention, a cooling treatment is carried out as a pretreatment prior to blowing slaked lime into the exhaust gas in order to cause a temperature of the slaked lime to fall up to the lowest degree possible, so that the above-mentioned object can be accomplied.

That is to say, the present invention is connected with a method for treating an exhaust gas which comprises cooling an alkaline neutralizing agent powder and blowing the cooled powder into the exhaust gas in order to remove acidic gaseous components from the exhaust gas.

Further, the present invention is connected with a method for treating an exhaust gas which comprises recovering the used alkaline neutralizing agent, cooling it, and utilizing it again in order to remove acidic gaseous components from the exhaust gas.

In other words, according to the method of the present invention, the cooling treatment is carried out as a pretreatment for the reutilization of the used slaked lime in order to cool the discharged slaked lime to a degree of its dew point or less, and the cooled slaked lime is then blown into the exhaust gas in order to take part in the removal reaction of the acidic gaseous components again.

The exhaust gas to which the method of the present invention can be applied contains one or more kinds of the acidic gaseous components. Examples of these acidic gaseous components include hydrogen chloride (HCl), sulfur oxides ($SO_2$, $SO_3$), hydrogen fluoride (HF) and the like.

Fig. 1 is a flow sheet illustrating one embodiment of a method according to the present invention;

Fig. 2 is a flow sheet illustrating another embodiment thereof;

Fig. 3 is a flow sheet illustrating still another

- 4 -

embodiment thereof; and

Fig. 4 is a partial flow sheet illustrating a further embodiment thereof, and the same numerals and symbols in the drawings represent the same members therein.

In the present invention, examples of usable alkaline neutralizing agents include slaked lime, calcium carbonate, quick lime, $Na_2CO_3$, $NaHCO_3$, $MgO$, $Mg(OH)_2$, $MgCO_3$, $FeO$, $Fe_2O_3$, $Fe(OH)_3$, $FeCO_3$, $Fe_2(CO_3)_3$, $NiO$, $Ni(OH)_2$, $NiCO_3$, $BaO$, $Ba(OH)_2$, $BaCO_3$, $ZnO$, $Zn(OH)_2$, $ZnCO_3$, $CuO$, $Cu(OH)_2$, $CuCO_3$ and the like, and they may be used alone or in the form of a mixture of plural kinds thereof.

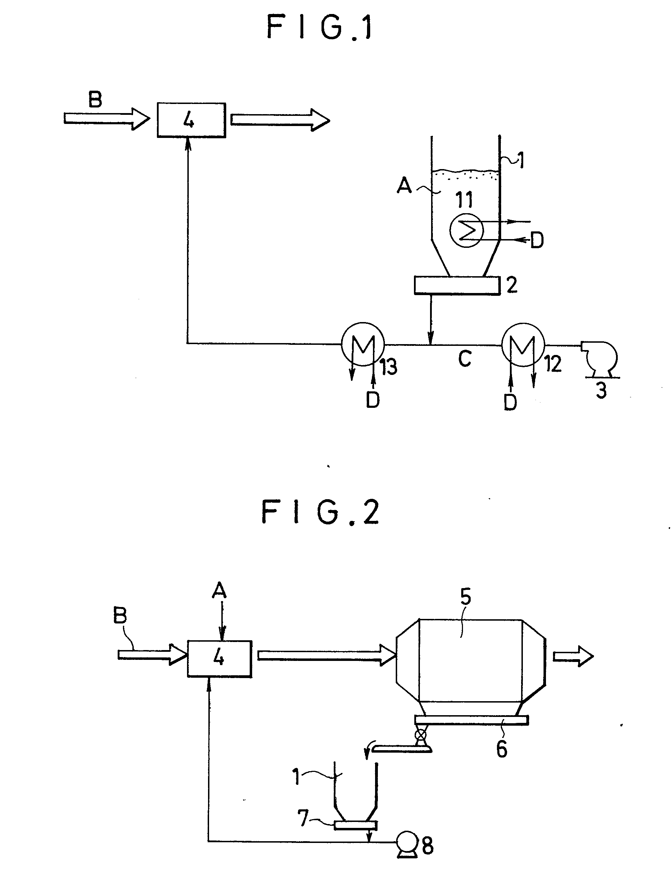

In Fig. 1, an alkaline neutralizing agent (hereinafter referred to conveniently as slaked lime) A which is stored in a slaked lime silo 1 is discharged therefrom through a feeder 2 for quantitatively feeding the slaked lime A and is then fed to a powder-jetting device 4 by virtue of a blower 3. To the device 4, an exhaust gas B from an incinerator is also fed, and the slaked lime is then jetted into the exhaust gas B which is now passing through the device 4, so that the slaked lime will bring about the neutralization reaction with acidic gaseous components in the exhaust gas.

As one embodiment of cooling the slaked lime A, cooling devices 11, 12 and 13 are disposed at a lower portion in the silo 1, at an outlet of the blower 3 and on a carrying line for the slaked lime A. In this case, the respective cooling

devices 11, 12 and 13 may be disposed at all of the above-mentioned positions, alternatively one or two of these cooling devices may be done at optional positions thereof. Symbol D in Fig. 1 represents a refrigerant.

When the slaked lime having ordinary temperature is brought into contact with the high-temperature exhaust gas, moisture in the exhaust gas will condense on the surfaces of the slaked lime powder and the condensed water will effectively accelerate the neutralization reaction of the slaked lime powder and the acidic gaseous components in the high-temperature exhaust gas.

According to the present invention, since the slaked lime A is cooled, an amount of the condensed water increases and the above-mentioned condensation phenomenon thus occurs more remarkably.

As in the present invention, if temperatures of the slaked lime and air for carrying it are further lowered, moisture in the carrying air will also be condensed on the surfaces of the slaked lime powder, with the result that the above-mentioned functional effect of accelerating the reaction will be enhanced more.

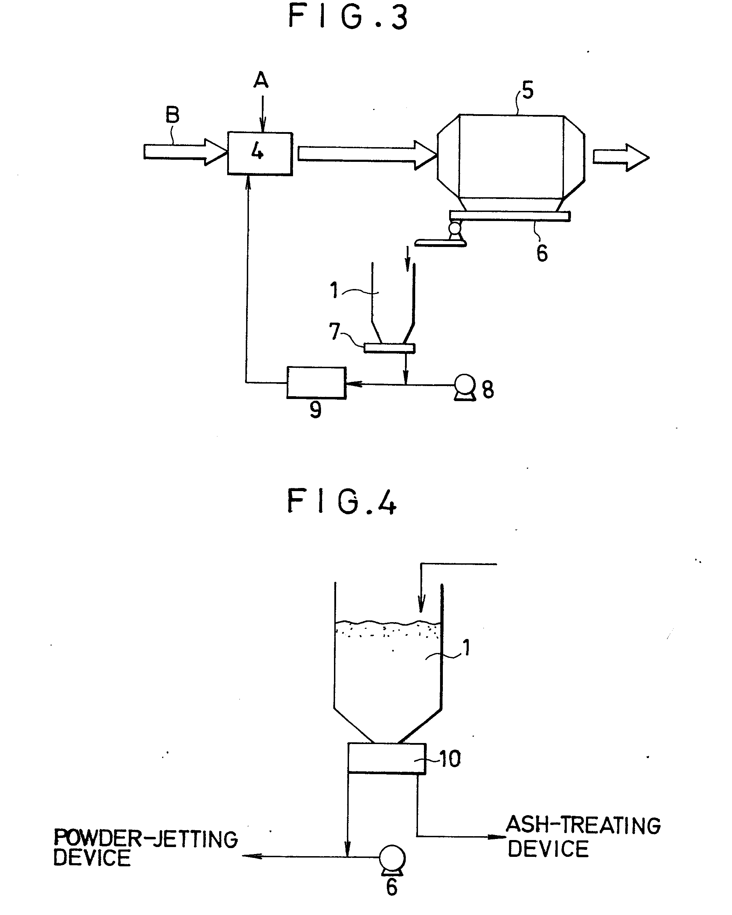

Figs. 2 and 3 show other embodiments of the present invention.

In the drawings, the slaked lime A is fed, through the powder-jetting device 4, into the exhaust gas B from the incinerator, so that the neutralization reaction occurs between the slaked lime A and the acidic gaseous component, e.g., hydrogen chloride in the exhaust gas. The fed slaked lime is collected by an electrical dust collector 5 together with a burned dust.

The thus collected ash (hereinafter referred to as EP ash) is carried to an EP ash storage tank 1 via a rotary valve 6 for discharging the ash from the collector 5 and is then stored in the tank 1. Afterward, the ash is discharged therefrom by a feeder 7 for quantitatively feeding it, is then fed to the powder-jetting device 4 again by the blower 8, and is dispersed into the exhaust gas. At this time, the EP ash discharged from the electrical dust collector 5 has a high temperature of 230 to 280°C. As described above, the unreacted slaked lime in the EP ash with such a high temperature is not so high in reactivity, under which conditions the cyclic utilization of the slaked lime is · meaningless. For this reason, it is required to lower the temperature of the EP ash.

In order to satisfy this requirement, systems shown in Figs. 2 and 3 can be contrived. That is to say, a temperature of the cooled EP ash is preferably as low as a dew point or less of the exhaust gas, as described below, and this low temperature can be obtained sufficiently by using air for feeding the EP ash which is intoduced through the

- 7 -

blower 8, if a temperature of the atmospheric air is low (Fig. 2). On the contrary, if the temperature of air in the atmosphere is high, a cooling device 9 should be disposed on the EP ash feeding line to cool the EP ash, as shown in Fig. 3. Such a cooling device 9 may comprise a system containing a water-cooling jacket, a system in which fins are windingly provided along the carrying line, or a system having a chilling unit.

The EP ash which has been cooled up to a desired temperature in such a manner as described above is dispersed again into the exhaust gas in the powder-jetting device 4, so that it is subjcted to the neutralization reaction with an acidic gaseous component, e.g., hydrogen chloride.

In an additional embodiment shown in Fig. 4 in which the EP ash is reutilized, a bidirectional feeder 10 for quantitatively feeding the EP ash may be disposed at an outlet of the EP ash storage tank 1 so that a feed of the EP ash to the refeed line may be controlled and so that the remaining EP ash may be discharged therefrom to an ash treating device.

The EP ash is discharged from the electrical dust collector (i.e., EP) in a completely dry state and at a high temperature of 230 to 280°C. When this EP ash is cooled to the lowest temperature possible and is brought into contact with the high-temperature exhaust gas, a part of moisture contained in the exhaust gas will condense due to a temperature difference between the EP ash and the exhaust gas. The thus condensed water functions to effectively accelerate the neutralization reaction of the unreacted slaked lime with the acidic gaseous components in the high-temperature exhaust gas. Therefore, if the EP ash is refed remaining at a high temperature, such a high reactivity of the ash as described above cannot be obtained. Further, it will be understood that a temperature of the cooled EP ash preferably is at a level of a dew point or less of the exhaust gas.

Example 1

Samples of an alkaline neutralizing agent ($Ca(OH)_2$ was used) were cooled to 20°C and 10°C according to the method of the present invention and was blown into an exhaust gas having a temperature of 300°C to remove hydrogen chloride. In Table 1 below, the results of hydrogen chloride removal rate are compared with those of a conventional case in which the neutralizing agent at room temperature (30°C) was blown into the exhaust gas having a temperature of 300°C.

Table 1

| | Conventional Example | Examples of Present Invention | |
|---|---|---|---|
| Temp. of Exhaust Gas | 300°C | 300°C | 300°C |
| Temp. of Cooled Neutralizing Agent | 30°C | 20°C | 10°C |
| Removal Rate of Hydrogen Chloride | 40% | 47% | 55% |

As be definite from the results in Table 1 above, the lower the temperature of the cooled neutralizing agent becomes, the higher the removal rate of hydrogen chloride becomes.

Example 2

The procedure of Example 1 was repeated with the exception that an exhaust gas containing sulfur oxides (SOx) as acidic gaseous components was used. The results are set forth in Table 2.

Table 2

| | Conventional Example | Examples of Present Invention | |
|---|---|---|---|
| Temp. of Exhaust Gas | 300°C | 300°C | 300°C |
| Temp. of Cooled Neutralizing Agent | 30°C | 20°C | 10°C |
| Removal Rate of Sulfur Oxides | 20% | 28% | 35% |

As be apparent from the results in Table 2 above, the lower the temperature of the cooled neutralizing agent becomes, the higher the removal rate of sulfur oxides of the acidic gaseous components becomes.

According to the present invention, the reactivity of the alkaline neutralizing agent can be heightened and thus the removal rate of the acidic gaseous components can also be enhanced. Further, if the same removal rate of the acidic gaseous components as in the conventional technique suffices, an amount of the used alkaline neutralizing agent can be reduced, which fact will lead to a noticeable decrease in treatment costs.

What is Claimed is:

1. A method for treating an exhaust gas which comprises cooling an alkaline neutralizing agent powder and blowing said cooled powder into said exhaust gas in order to remove acidic gaseous components from said exhaust gas.

2. The method for treating an exhaust gas according to Claim 1 wherein said acidic gaseous component is at least one selected from the group consisting of hydrogen chloride, sulfur oxides and hydrogen fluoride.

3. A method for treating an exhaust gas which comprises recovering a used alkaline neutralizing agent, cooling it, and utilizing it again in order to remove acidic gaseous components from said exhaust gas.

4. The method for treating an exhaust gas according to Claim 1 or 3 wherein said alkaline neutralizing agent is at least one selected from the group consisting of slaked lime, calcium carbonate, quick lime, $Na_2CO_3$, $NaHCO_3$, $MgO$, $Mg(OH)_2$, $MgCO_3$, $FeO$, $Fe_2O_3$, $Fe(OH)_3$, $FeCO_3$, $Fe_2(CO_3)_3$, $NiO$, $Ni(OH)_2$, $NiCO_3$, $BaO$, $Ba(OH)_2$, $BaCO_3$, $ZnO$, $Zn(OH)_2$, $ZnCO_3$, $CuO$, $Cu(OH)_2$ and $CuCO_3$.

# FIG.1

# FIG.2

# FIG.3

# FIG.4

POWDER-JETTING
DEVICE

ASH-TREATING
DEVICE